# EUROPEAN PATENT APPLICATION

(11) **EP 4 131 973 A1**
(43) Date of publication of application: **08.02.2023**
(21) Application number: 22171875.2
(22) Date of filing: 05.05.2022
(51) Int. Cl.: H04N 21/2187, H04N 21/431, H04N 21/475, H04N 21/4788, H04N 21/81

(54) **METHOD AND APPARATUS FOR PROCESSING LIVE-STREAMING DATA**

(30) Priority: 03.08.2021 CN 202110888276
(71) Applicant: Beijing Dajia Internet Information Technology Co., Ltd., Beijing 100085 (CN)
(72) Inventor: ZHANG, Haowen, Beijing, 100085 (CN); TAN, Peiqiang, Beijing, 100085 (CN)
(74) Representative: Yang, Shu

(57) **Abstract**

Provided is a method for processing live-streaming data, belonging to the field of internet technologies. The method includes: acquiring (S201) a list of viewer accounts of a live-streaming room; in the case that a target viewer account exists in the list of viewer accounts, determining (S302) a predetermined avatar and a predetermined account name; and displaying (S303) the viewer accounts in the live-streaming room, wherein the account avatar of the target viewer account is displayed as the predetermined avatar, and the account name of the target viewer account is displayed as the predetermined account name.

## Description

### TECHNICAL FIELD

The present disclosure relates to the field of the Internet technologies, and in particular, relates to a method and apparatus for processing live-streaming data.

### BACKGROUND

With developments of the Internet technologies, live streaming is widely used, and the feature of interactions of the live streaming is appealing to many users. In the live streaming, viewer accounts can interact with an anchor by presenting gifts. In some arrangements of a live-streaming room, a viewer ranking list is displayed to show a part of viewer accounts in the live-streaming room in a descending order of values of gifts presented by the respective viewer accounts.

Management of the interactions in the living room is a challenge. For example, viewer accounts in the live-streaming room may attempt to attract viewer accounts to their own live-streaming rooms by creating special account avatars and special account names and making their special avatars and special accounts appear on the viewer ranking list by sending gifts to the anchor.

### SUMMARY

Embodiments of the present disclosure provide a method and apparatus for processing live-streaming data.

According to one aspect of the embodiments of the present disclosure, a method for processing live-streaming data is provided. The method includes: acquiring a list of viewer accounts of a live-streaming room, wherein the list of viewer accounts includes account names and account avatars of the viewer accounts in the live-streaming room; in the case that a target viewer account exists in the list of viewer accounts, determining a predetermined avatar and a predetermined account name, wherein the target viewer account is a viewer account carrying a target label, and the target label is configured to indicate that the account name and the account avatar of the target viewer account are to be replaced; and displaying the viewer accounts in the live-streaming room based on the list of viewer accounts, wherein the account avatar of the target viewer account is displayed as the predetermined avatar, and the account name of the target viewer account is displayed as the predetermined account name.

According to another aspect of the embodiments of the present disclosure, a method for processing live-streaming data is provided. The method includes: acquiring at least one candidate viewer account in a live-streaming room, wherein the at least one candidate viewer account includes a newly added viewer account in the live-streaming room within a first predetermined duration; adding a target label to a target viewer account in the at least one candidate viewer account, wherein the target viewer account is a viewer account whose account avatar or account name includes content to be modified, and the target label is configured to indicate that an account name and an account avatar of the target viewer account are to be replaced; and sending a list of viewer accounts of the live-streaming room, wherein the list of viewer accounts includes account avatars and account names of the viewer accounts in the live-streaming room and the target label of the target viewer account.

According to another aspect of the embodiments of the present disclosure, an apparatus for processing live-streaming data is provided. The apparatus includes: an acquiring unit, a determining unit, and a displaying unit.

The acquiring unit is configured to acquire a list of viewer accounts of a live-streaming room, wherein the list of viewer accounts includes account names and account avatars of the viewer accounts in the live-streaming room.

The determining unit is configured to, in the case that a target viewer account exists in the list of viewer accounts, determine a predetermined avatar and a predetermined account name, wherein the target viewer account is a viewer account carrying a target label, and the target label is configured to indicate that the account name and the account avatar of the target viewer account are to be replaced.

The displaying unit is configured to display the viewer accounts in the live-streaming room based on the list of viewer accounts, wherein the account avatar of the target viewer account is displayed as the predetermined avatar, and the account name of the target viewer account is displayed as the predetermined account name.

According to another aspect of the embodiments of the present disclosure, an apparatus for processing live-streaming data is provided. The apparatus includes: an acquiring unit, an adding unit, and a sending unit.

The acquiring unit is configured to acquire at least one candidate viewer account in a live-streaming room, wherein the at least one candidate viewer account includes a newly added viewer account in the live-streaming room within a first predetermined duration.

The adding unit is configured to add a target label to a target viewer account in the at least one candidate viewer account, wherein the target viewer account is a viewer account whose account avatar or account name includes content to be modified, and the target label is configured to indicate that an account name and an account avatar of the target viewer account are to be replaced.

The sending unit is configured to send a list of viewer accounts of the live-streaming room, wherein the list of viewer accounts includes account avatars and account names of the viewer accounts in the live-streaming room and the target label of the target viewer account.

According to another aspect of the embodiments of the present disclosure, a non-transitory computer-readable storage medium storing one or more instructions therein is provided. The one or more instructions, when loaded and executed by a processor of a terminal, cause the terminal to perform the above method for processing live-streaming data; or the one or more instructions, when loaded and executed by a processor of a server, cause the server to perform the above method for processing live-streaming data.

According to another aspect of the embodiments of the present disclosure, a computer program product including a computer program storing one or more instructions therein is provided. The computer program, when run by a processor of a terminal, cause the terminal to performed the method for processing live-streaming data; or the computer program, when run by a processor of a server, cause the server to perform the method for processing live-streaming data.

With the technical solutions of the embodiments of the present disclosure, by displaying an account avatar of a target viewer account in a live-streaming room as a predetermined avatar, and displaying an account name of the target viewer account as a predetermined account name, the cases where the target viewer account attempts to lure other viewer accounts to jump to his/her own live-streaming room by using his/her account avatar and account name are reduced, thereby reducing loss of users in a current live-streaming room and improving the intelligence of live-streaming room management.

### BRIEF DESCRIPTION OF THE DRAWINGS

FIG. 1 shows a schematic diagram of an implementation environment of a method for processing live-streaming data according to an exemplary embodiment of the present disclosure;
FIG. 2 is a flowchart of a method for processing live-streaming data according to an exemplary embodiment of the present disclosure;
FIG. 3 is another flowchart of a method for processing live-streaming data according to an exemplary embodiment of the present disclosure;
FIG. 4 is still another flowchart of a method for processing live-streaming data according to an exemplary embodiment of the present disclosure;
FIG. 5 is a schematic diagram of a live-streaming interface according to an exemplary embodiment of the present disclosure;
FIG. 6 is a schematic diagram of a display interface of a list of viewer accounts according to an exemplary embodiment of the present disclosure;
FIG. 7 is a schematic diagram of a display form of second prompt information according to an exemplary embodiment of the present disclosure;
FIG. 8 is yet still another flowchart of a method for processing live-streaming data according to an exemplary embodiment of the present disclosure;
FIG. 9 is a schematic flowchart of a report-for-checking logic according to an exemplary embodiment of the present disclosure;
FIG. 10 is a schematic flowchart of a logic for acquiring a list of viewer accounts according to an exemplary embodiment of the present disclosure;
FIG. 11 is a schematic flowchart of a logic for pop-up reminding according to an exemplary embodiment of the present disclosure;
FIG. 12 is a block diagram of an apparatus for processing live-streaming data according to an exemplary embodiment of the present disclosure;
FIG. 13 is another block diagram of an apparatus for processing live-streaming data according to an exemplary embodiment of the present disclosure;
FIG. 14 is a block diagram of a terminal according to an exemplary embodiment of the present disclosure; and
FIG. 15 is a block diagram of a server according to an exemplary embodiment of the present disclosure.

### DETAILED DESCRIPTION

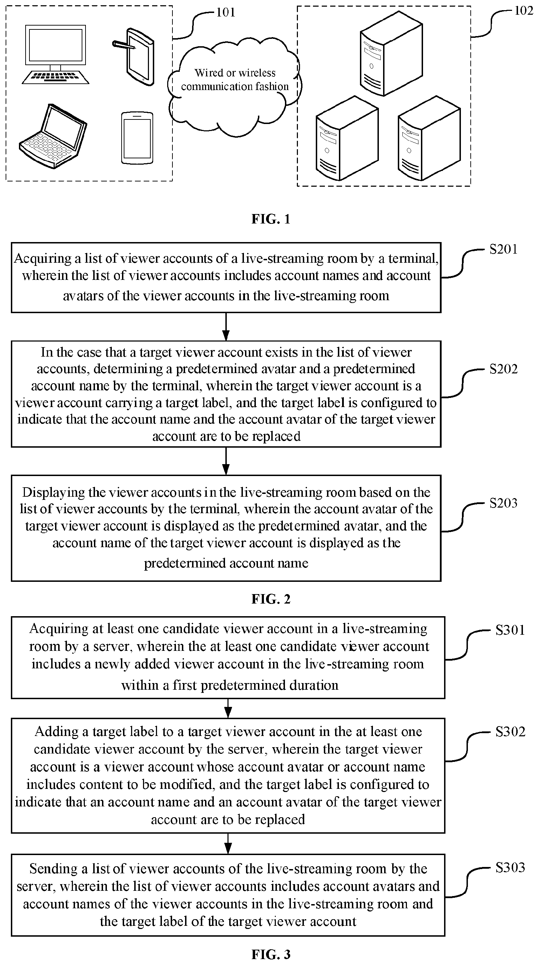

FIG. 1 shows a schematic diagram of an implementation environment of a method for processing live-streaming data according to an exemplary embodiment. Referring to FIG. 1, the implementation environment includes a terminal 101 and a server 102.

The terminal 101 may be at least one of a smart mobile phone, a smart watch, a laptop computer, a Moving Picture Experts Group Audio Layer III (MP3) player, a Moving Picture Experts Group Audio Layer IV (MP4) player, or a laptop portable computer. The terminal 101 is connected to the server 102 in a wired or wireless communication fashion, which is not limited in the embodiments of the present disclosure. The terminal 101 sends an information acquiring request to the server 102, such that the terminal 101 acquires, from the server 102 based on the information acquiring request, live-streaming room information of a live-streaming room that provides live streaming currently, and display the acquired live-streaming room information. Therefore, a user corresponding to an account logged on to the terminal 101 can select, based on the displayed live streaming room information, a live-streaming room that he/she wants to watch. In response to a selection operation on the live-streaming room, the terminal 101 sends a data acquiring request to the server 102, such that the terminal 101 acquires live-streaming data from the server 102 based on the data acquiring request. Therefore, by playing the live-streaming data on the terminal 101, the user can watch the live streaming. During the process of watching the live streaming, the account logged on to the terminal 101 can present a virtual commodity to an anchor, thereby realizing interaction between viewers and the anchor. In some embodiments, the terminal 101 may be a terminal of a viewer of the live-streaming room or may be a plurality of terminals corresponding to the viewer accounts of the live-streaming room.

The terminal 101 refers to one of a plurality of terminals. The embodiments of the present disclosure are only described by taking the terminal 101 as an example. Those of ordinary skill in the art can know that a number of the terminals may be greater or smaller. For example, there are several, tens of, or hundreds of the terminals. The number and device type of the terminals are not limited in the embodiments of the present disclosure.

The server 102 can be at least one of one server, a plurality of servers, a cloud server, a cloud computing platform, and a virtual center. The server 102 receives the information acquiring request sent by the terminal 101, acquires the live-streaming room information of the live-streaming room that provides the live streaming currently, and sends the acquired live-streaming room information to the terminal 101. The server 102 can further receive the data acquiring request of the terminal 101, acquire live-streaming data of a corresponding live-streaming room, and sends the acquired live-streaming data to the terminal 101. Therefore, a viewer account can watch the live streaming by the terminal 101. The server 102 can further receive a commodity presenting instruction sent by the terminal 101, and present a virtual commodity to a corresponding anchor based on the received commodity presenting instruction. In some embodiments, the server 102 can further sequence all viewer accounts in the live-streaming room based on values of virtual commodities presented by the viewer accounts in the live-streaming room. In some embodiments, a number of the above server 102 may be greater or smaller, which is not limited in the embodiments of the present disclosure. In some other embodiments, the server 102 further includes another functional server, thereby providing more comprehensive and diversified services.

FIG. 2 is a flowchart of a method for processing live-streaming data according to an exemplary embodiment. As shown in FIG. 2, the method includes the following processes.

In S201, a terminal acquires a list of viewer accounts of a live-streaming room, wherein the list of viewer accounts includes account names and account avatars of the viewer accounts in the live-streaming room.

In S202, in the case that a target viewer account exists in the list of viewer accounts, the terminal determines a predetermined avatar and a predetermined account name, wherein the target viewer account is a viewer account carrying a target label, and the target label is configured to indicate that the account name and the account avatar of the target viewer account are to be replaced.

In some embodiments, the target viewer account is determined by a server and the target label is added to the target viewer account by the server as described below. In some embodiments, in response to acquiring the list of viewer accounts in the live-streaming room, the terminal determines whether the list of viewer accounts includes a target label of a target viewer account. In the case that the list of viewer accounts includes the target label of the target viewer account, the terminal determines that the target viewer account exists in the list of viewer accounts. The terminal determines the predetermined avatar and the predetermined account name, wherein the predetermined avatar is used to be displayed as an account avatar of the target viewer account and the predetermined account name is used to be displayed as an account name of the target viewer account. The predetermined avatar is different from an original account avatar or the predetermined account name is different from an original account name or both the predetermined avatar and the predetermined account name are different from an original account avatar and an original account name. In some embodiments, the predetermined avatar and the predetermined viewer account may be symbols, characters, images, or any other forms such that the original account avatar and the account name are not recognizable.

In S203, the terminal displays the viewer accounts in the live-streaming room based on the list of viewer accounts, wherein the account avatar of the target viewer account is displayed as the predetermined avatar, and the account name of the target viewer account is displayed as the predetermined account name.

In some embodiments, a live-streaming application is installed in the terminal. The live-streaming application has functions of identifying the target viewer account, and replacing and displaying the account name and the account avatar of the target viewer account. The terminal can perform the above processes S201 to S203 via the live-streaming application.

With the technical solutions of the embodiments of the present disclosure, by displaying an account avatar of a target viewer account in a live-streaming room as a predetermined avatar, and displaying an account name of the target viewer account as a predetermined account name, the cases where the target viewer account attempts to lure other viewer accounts to jump to his/her own live-streaming room by using his/her account avatar and account name are reduced, thereby reducing loss of users in a current live-streaming room and improving the intelligence of live-streaming room management.

In some embodiments, acquiring the list of viewer accounts of the live-streaming room includes: displaying a list display control and a first predetermined number of account avatars; and acquiring the list of viewer accounts of the live-streaming room in response to a trigger operation on the list display control.

In some embodiments, displaying the first predetermined number of account avatars includes: in the case that the account avatar of the target viewer account exists in the first predetermined number of account avatars, displaying the account avatar of the target viewer account as the predetermined avatar during displaying the first predetermined number of account avatars.

In some embodiments, the method further includes: in response to a trigger operation on the predetermined avatar or the predetermined account name, displaying first prompt information, wherein the first prompt information is configured to indicate that the account avatar and the account name of the target viewer account have been replaced.

In some embodiments, the method further includes: displaying second prompt information, wherein the second prompt information is configured to indicate that content to be modified exists in an account avatar or an account name of an account logged on to the terminal.

For example, the links of the predetermined avatar and the predetermined account name with the personal home page of the target viewer account are disconnected such that a trigger operation on the predetermined avatar and the predetermined account name does not cause switching to the live-streaming room of the target viewer account. In some embodiments, the method further includes: prohibiting an access of a personal home page of the target viewer account via a trigger operation on the predetermined avatar and the predetermined account name.

In some embodiment, prohibiting the personal home page of the target viewer account from being accessed includes: in the case that a trigger operation on the account avatar or account name of the target viewer account is detected, not performing a response operation, or displaying third prompt information, wherein the third prompt information is configured to indicate that the personal home page of the account to which the currently triggered account avatar or account name belongs is in a forbidden state.

FIG. 3 is a flowchart of a method for processing live-streaming data according to an exemplary embodiment. As shown in FIG. 3, the method includes the following processes.

In S301, a server acquires at least one candidate viewer account in a live-streaming room, wherein the at least one candidate viewer account includes a newly added viewer account in the live-streaming room within a first predetermined duration.

In S302, the server adds a target label to a target viewer account in the at least one candidate viewer account, wherein the target viewer account is a viewer account whose account avatar or account name includes content to be modified, and the target label is configured to indicate that an account name and an account avatar of the target viewer account are to be replaced.

In S303, the server sends a list of viewer accounts of the live-streaming room, wherein the list of viewer accounts includes account avatars and account names of the viewer accounts in the live-streaming room and the target label of the target viewer account.

With the technical solutions of the embodiments of the present disclosure, in the case that the target viewer account whose account name and account avatar are to be replaced exists in the newly added candidate viewer account in the live-streaming room within the first predetermined duration, the target label is added to the target viewer account. By sending the list of viewer accounts including the target label to the terminal, the terminal can display, based on the target label included in the received list of viewer accounts, the account avatar of the target viewer account in the list of viewer accounts of the live-streaming room as a predetermined avatar, and the account name of the target viewer account as a predetermined account name. Therefore, the cases where the target viewer account lures other viewer accounts to jump to his/her own live-streaming room by using his/her account avatar and account name is reduced, thereby reducing loss of users in a current live-streaming room and improving the intelligence of live-streaming room management.

In some embodiments, acquiring the at least one candidate viewer account in the live-streaming room includes: acquiring viewer accounts in the live-streaming room at a current moment and viewer accounts in the live-streaming room at a moment of the first predetermined duration before the current moment; and determining the at least one candidate viewer account based on the viewer accounts in the live-streaming room at the current moment and the viewer accounts in the live-streaming room at the moment of the first predetermined duration before the current moment.

In some embodiments, determining the at least one candidate viewer account based on the viewer accounts in the live-streaming room at the current moment and the viewer accounts in the live-streaming room at the moment of the first predetermined duration before the current moment includes: determining at least one newly added viewer account in the live-streaming room within the first predetermined duration; and acquiring the at least one candidate viewer account by filtering out, from the at least one newly added viewer account, a viewer account whose account avatar and account name have been replaced and a viewer account that has been identified within a second predetermined duration before the current moment.

In some embodiments, the method further includes: identifying the target viewer account whose account avatar or account name includes the content to be modified from the at least one candidate viewer account.

In some embodiments, the method further includes: adding a first label to an identified viewer account, wherein the first label is configured to indicate that the viewer account has been identified.

In some embodiments, the method further includes: sending a first predetermined number of account avatars in the live-streaming room to the terminal in the case that an account logged on to the terminal enters the live-streaming room; wherein the account avatar of the target viewer account in the first predetermined number of account avatars has been replaced with the predetermined avatar.

In some embodiments, the method further includes: sending second prompt information to a terminal to which the target viewer account is logged in, wherein the second prompt information is configured to indicate that content to be modified exists in an account avatar or an account name of the target viewer account.

In some embodiments, the method further includes: adding a second label to the target viewer account, wherein the second label is configured to indicate that the second prompt information has been sent to the target viewer account.

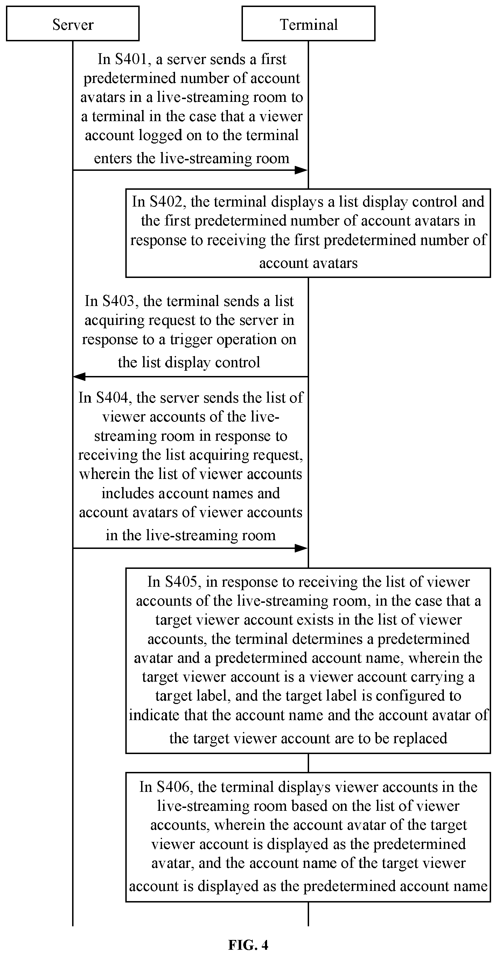

FIG. 2 and FIG. 3 merely show basic flows of the present disclosure. The following further describes the method for processing live-streaming data according to the present disclosure based on a specific implementation process. FIG. 4 is a flowchart of a method for processing live-streaming data according to an exemplary embodiment. As shown in FIG. 4, the method includes the following processes.

In S401, a server sends a first predetermined number of account avatars in a live-streaming room to a terminal in the case that a viewer account logged on to the terminal enters the live-streaming room.

In some embodiments, the terminal displays at least one live-streaming room that provides live streaming currently. A user corresponding to the account logged on to the terminal selects a live-streaming room that he/she wants to watch from the at least one live-streaming room to trigger the live-streaming room. The terminal displays a live-streaming interface of the live-streaming room in response to a trigger operation of the user, such that the account logged on to the terminal enters the live-streaming room. The server sends live-streaming data of the live-streaming room and a first predetermined number of account avatars in the live-streaming room to the terminal in the case that the account logged on to the terminal enters the live-streaming room, wherein the account avatars are account avatars of viewer accounts in the live-streaming room. The first predetermined number is any positive integral value. For example, the first predetermined number is 3 or another value, which is not limited in the embodiments of the present disclosure.

In the case that the account logged on to the terminal enters the live-streaming room, the server establishes a long connection to the terminal. During an entire process that the user corresponding to the account logged on to the terminal watches the live streaming of the live-streaming room by the terminal, the server can actively send related data to the terminal through the long connection. For example, the related data is the live-streaming data, the list of viewer accounts of the live-streaming room, and the like.

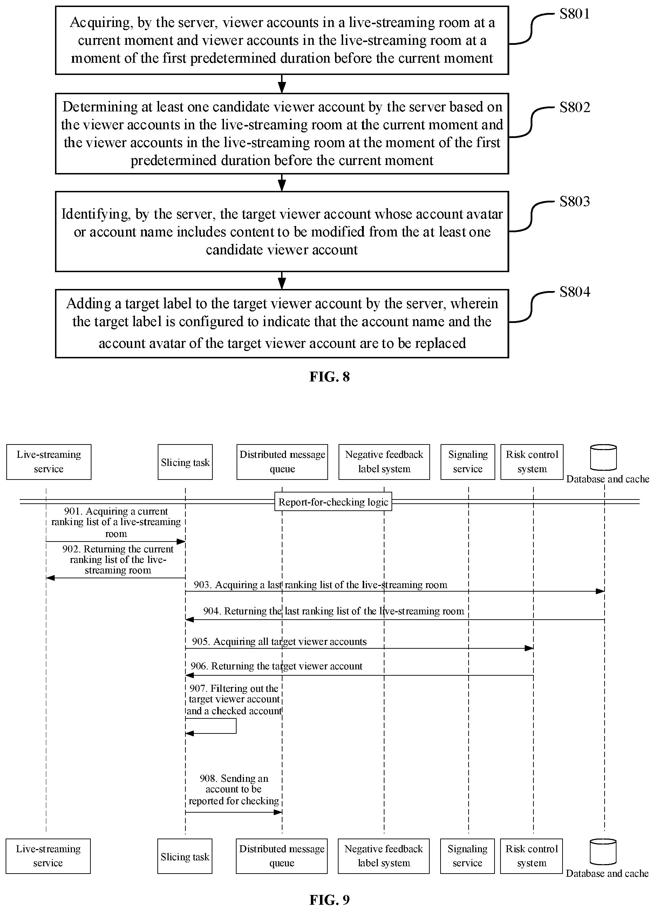

The list of viewer accounts is determined by the server, such that the server can send the list of viewer accounts to the terminal at every first predetermined duration, or send the list of viewer accounts to the terminal in the case that the terminal requests for the list of viewer accounts. A process that the server determines the list of viewer accounts can be referred to the embodiment shown in FIG. 8, and details are not described herein again. The first predetermined duration is any duration. For example, the first predetermined duration is 3 seconds (S), 5S, or another value, which is not limited in the embodiments of the present disclosure.

The first predetermined number of account avatars are determined by the server based on the values of the virtual commodities presented by all the viewer accounts in the live-streaming room. In some embodiments, the server determines the values of the virtual commodities presented by all the viewer accounts in the live-streaming room, sequences all the viewer accounts in the live-streaming room in descending order of the values, acquires account avatars of top viewer accounts of the first predetermined number, and sends the first predetermined number of the account avatars to the terminal. In some embodiments, the server sequences all the viewer accounts in the live-streaming room in descending order of the values with an account presenting the highest value of the virtual commodities being listed in the first place.

For example, the first predetermined number being 3 is still taken as an example. Upon sequencing all the viewer accounts in the live-streaming room in descending order of the values of the virtual commodities presented by all the viewer accounts in the live-streaming room, the server acquires account avatars of top 3 viewer accounts, and sends the three account avatars to the terminal.

Prior to sending the first predetermined number of account avatars to the terminal, in the case that an account avatar of a target viewer account exists in the first predetermined number of account avatars, the server replaces the account avatar of the target viewer account with a predetermined avatar, and then sends the first predetermined number of account avatars. The target viewer account is a viewer account whose account avatar and account name are to be replaced, and content to be modified exists in the account avatar or the account name of the target viewer account.

In S402, the terminal displays a list display control and the first predetermined number of account avatars in response to receiving the first predetermined number of account avatars.

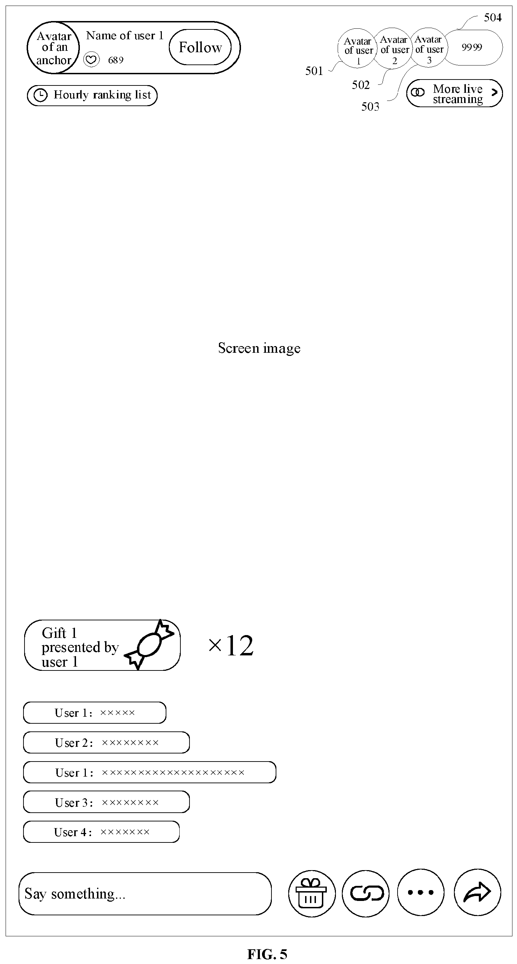

The first predetermined number being 3 is taken as an example. FIG. 5 is a schematic diagram of a live-streaming interface according to an exemplary embodiment. As shown in FIG. 5, the first predetermined number (namely, 3) of account avatars (an account avatar 501, an account avatar 502, and an account avatar 503) are displayed at an upper right corner of the live-streaming interface. In addition, a list display control 504 is displayed at a position adjacent to the account avatar 503.

By displaying the first predetermined number of account avatars, an effect of displaying the list of viewer accounts in a contracted fashion can be achieved, thereby reducing data amount to be processed in live streaming, reducing the processing stress of the terminal and the server, and improving the processing speed of the live-streaming data.

In the case that the account avatar of the target viewer account exists in the first predetermined number of account avatars, the server has replaced the account avatar of the target viewer account as the predetermined avatar prior to sending the first predetermined number of account avatars. As a result, in the case that the account avatar of the target viewer account exists in the first predetermined number of account avatars, the terminal displays the account avatar of the target viewer account as the predetermined avatar during displaying the first predetermined number of account avatars.

By replacing the account avatar of the target viewer account in the first predetermined number of account avatars, the account avatar of the target viewer account is displayed as the predetermined avatar, such that the cases where the target viewer account attracts other viewer accounts to jump to his/her own live-streaming room by using his/her account avatar are reduced, thereby improving the intelligence of live-streaming room management.

In S403, the terminal sends a list acquiring request to the server in response to a trigger operation on the list display control.

In some embodiments, in the case that the user wants to expand and display the list of viewer accounts, the user triggers the list display control. The terminal sends the list acquiring request to the server in response to the trigger operation on the list display control, and acquires a complete list of viewer accounts.

The live-streaming interface shown in FIG. 5 is taken as an example. In the case that the user triggers the list display control 504, the terminal sends the list acquiring request to the server in response to the trigger operation on the list display control 504.

By providing the list display control in the live-streaming room, the viewer accounts can view the list of viewer accounts of the live-streaming room by the list display control, thereby improving the flexibility of live streaming.

In S404, the server sends the list of viewer accounts of the live-streaming room in response to receiving the list acquiring request, wherein the list of viewer accounts includes account names and account avatars of viewer accounts in the live-streaming room.

In some embodiments, in response to receiving the list acquiring request, the server acquires a list of viewer accounts of a corresponding live-streaming room, and sends the list of viewer accounts to the terminal.

The list of viewer accounts corresponds to a second predetermined number of viewer accounts, that is, the list of viewer accounts includes account avatars and account names of the second predetermined number of viewer accounts. The second predetermined number is any positive integral value. For example, the second predetermined number is 100 or another value, which is not limited in the embodiments of the present disclosure.

The viewer accounts of the second predetermined number are determined by the server based on values of virtual commodities presented by all the viewer accounts in the live-streaming room. In some embodiments, the server determines the values of the virtual commodities presented by all the viewer accounts in the live-streaming room, sequences all the viewer accounts in the live-streaming room in descending order of the values, and takes top viewer accounts of the second predetermined number as viewer accounts corresponding to the list of viewer accounts.

The second predetermined number being 100 is taken as an example. Upon sequencing all the viewer accounts in the live-streaming room in descending order of the values of the virtual commodities presented by all the viewer accounts in the live-streaming room, the server determines top 100 viewer accounts, and takes the 100 account avatars as viewer accounts corresponding to the list of viewer accounts.

In the case that a target viewer account exists in the second predetermined number of viewer accounts, the list of viewer accounts further includes a target label of the target viewer account. The target viewer account is a viewer account whose account avatar or account name includes content to be modified, and the target label is configured to indicate that the account name and the account avatar of the target viewer account are to be replaced. Replacing the account avatar and the account name of the target viewer account includes: displaying the account avatar of the target viewer account as the predetermined avatar and displaying the account name of the target viewer account as the predetermined account name.

In S405, in response to receiving the list of viewer accounts of the live-streaming room, in the case that a target viewer account exists in the list of viewer accounts, the terminal determines a predetermined avatar and a predetermined account name, wherein the target viewer account is a viewer account carrying a target label, and the target label is configured to indicate that the account name and the account avatar of the target viewer account are to be replaced.

The predetermined avatar and the predetermined account name are determined by a developer and stored in the terminal, or are determined by a user corresponding to the account logged on to the terminal and stored in the terminal, which is not limited in the embodiments of the present disclosure.

In S406, the terminal displays viewer accounts in the live-streaming room based on the list of viewer accounts, wherein the account avatar of the target viewer account is displayed as the predetermined avatar, and the account name of the target viewer account is displayed as the predetermined account name.

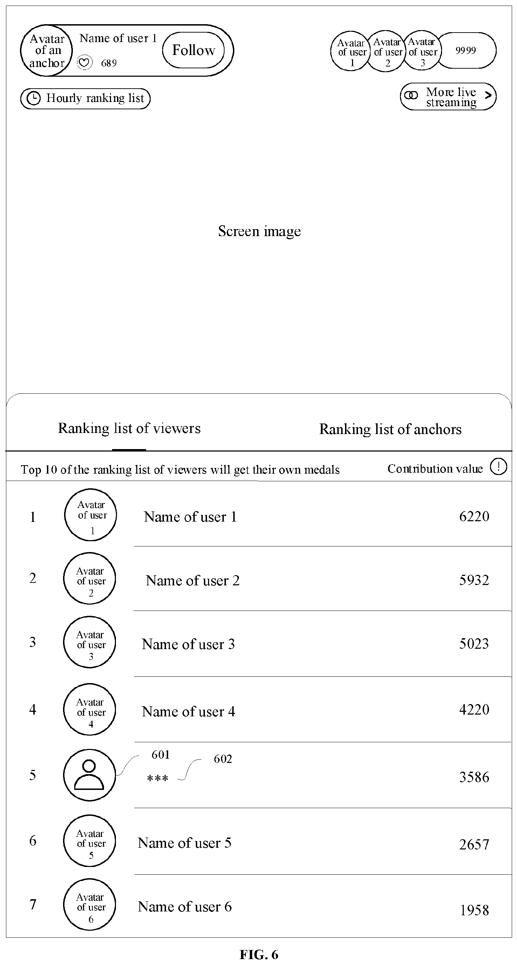

FIG. 6 is a schematic diagram of a display interface of a list of viewer accounts according to an exemplary embodiment. Referring to FIG. 6, in a list displaying region of the display interface, a plurality of viewer accounts in a live-streaming room are displayed in descending order of values (namely, contribution values) of virtual commodities presented by all the viewer accounts, wherein an account avatar 601 is the predetermined avatar, and an account name 602 (namely, "^{∗∗∗}") is the predetermined account name.

In the display interface shown in FIG. 6, the list displaying region only displays account avatars and account names of top 7 viewer accounts. The list displaying region is further provided with a sliding function. A user can perform a sliding operation in the list displaying region. The terminal displays account avatars and account names of other viewer accounts in response to the sliding operation of the user.

The above processes are described by taking an example in which both an account avatar and an account name of a target viewer account are replaced. In some other embodiments, in the case that the content to be modified only exists in the account avatar of the target viewer account, the target label further carries type indication information. The type indication information is configured to indicate a type of account information to be replaced, that is, the type indication information is configured to indicate whether the account avatar or the account name is to be replaced. In response to receiving the list of viewer accounts, the terminal performs, based on the type indication information carried in the target label included by the list of viewer accounts, corresponding processing on the account avatar and the account name of the target viewer account.

For example, in the case that the type indication information indicates that the account avatar is to be replaced, the terminal displays the account avatar of the target viewer account as the predetermined avatar, but does not process the account name of the target viewer account. In the case that the type indication information indicates that the account name is to be replaced, the terminal displays the account name of the target viewer account as the predetermined account name, but does not process the account avatar of the target viewer account.

For the above process mentioned above, the terminal is configured to prohibit the access of a personal home page of the target viewer account, no matter whether the account avatar or the account name of the target viewer account is replaced or both the account avatar and the account name of the target viewer account are replaced. Although the account avatar or the account name of the target viewer account is triggered, the terminal still cannot jump to the personal home page of the target viewer account, thereby preventing the terminal from jumping to a live-streaming room of the target viewer account.

In some embodiments, the personal home page of the target viewer account is configured to display information of the target viewer account, such as introduction of the target viewer account, videos published by the target viewer account, and the live-streaming room of the target viewer account, which are not limited in the embodiments of the present disclosure. In the case that the personal home page of the target viewer account is not prohibited from being accessed, the terminal can enter the live-streaming room of the target viewer account through the personal home page of the target viewer account. In the case that the personal home page of the target viewer account is prohibited from being accessed, the terminal cannot enter the personal home page of the target viewer account. As a result, the terminal cannot enter the live-streaming room of the target viewer account, such that the cases where viewer accounts jump to the live-streaming room from the current live-streaming room are reduced, thereby improving the intelligence of live-streaming room management.

In some embodiments, in the case that a user triggers the account avatar of the target viewer account, that is, the user triggers the predetermined avatar, the terminal displays first prompt information in response to the trigger operation on the predetermined avatar performed by the user.

In some other embodiments, in the case that the user triggers the account name of the target viewer account, that is, the user triggers the predetermined account name, the terminal displays the first prompt information in response to the trigger operation on the predetermined account name.

The first prompt information is configured to indicated that the account avatar and the account name of the target viewer account have been replaced.

By displaying the first prompt information when the predetermined avatar or the predetermined account name of the target viewer account is triggered, the fact that the account avatar and the account name of the target viewer account have been replaced can be reminded by the first prompt information. In this way, the personal home page of the target viewer account can be prohibited from being accessed, such that cases where viewer accounts jump to the target viewer account's live-streaming room from the current live-streaming room are reduced, thereby improving the intelligence of live-streaming room management. In some embodiments, the first prompt information also alerts the viewers that the personal home page of the target viewer account cannot be accessed when a user triggers the predetermined avatar or the predetermined account name.

For an account logged on to the terminal, the content to be modified may be also present in the account avatar or the account name of the account. That is, the account logged on to the terminal is the target viewer account whose account avatar or account name includes the content to be modified. In the case that the content to be modified exists in the account avatar of the account logged on to the terminal or the content to be modified exists in the account name of the account logged on to the terminal, the server sends second prompt information to the terminal. In response to receiving the second prompt information, the terminal displays the second prompt information. The second prompt information is configured to indicate that the content to be modified exists in the account avatar or the account name of the target viewer account.

In the case that the account logged on to the terminal is a target viewer account, by displaying the second prompt information, the fact that the account avatar and the account name of the account logged on to the terminal have been replaced can be indicated by the second prompt information. In this way, information amount in live streaming is increased, such that the user corresponding to the account logged on to the terminal can replace his/her account avatar and account name in time if they want to, thereby improving the intelligence of live-streaming room management.

The terminal displays an information display control in a live-streaming room, thereby displaying the second prompt information in the information display control.

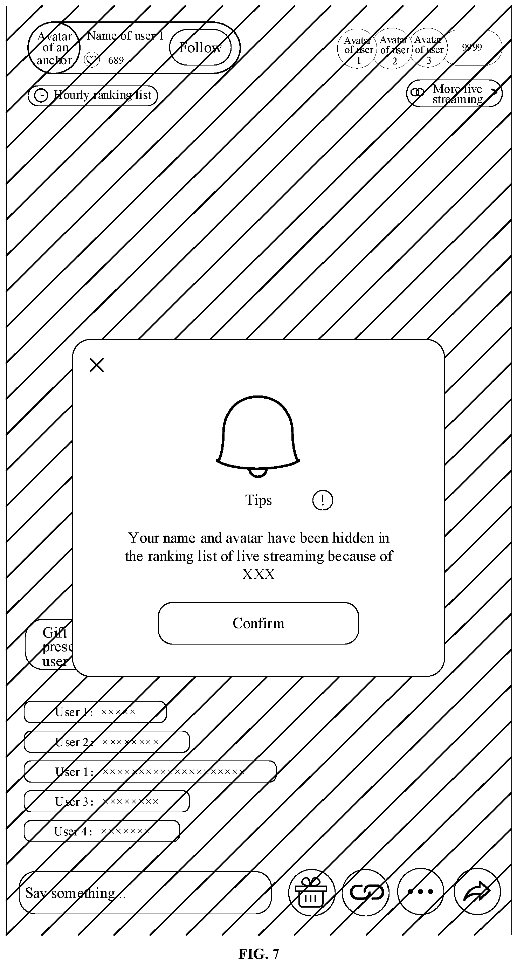

FIG. 7 is a schematic diagram of a display form of second prompt information according to an exemplary embodiment. Referring to FIG. 7, a pop-up window (namely, the information display control) is displayed in an interface. The second prompt information is displayed in the pop-up window.

In some embodiments, the second prompt information sent by the server carries indication information. The indication information is configured to indicate whether the content to be modified is an account avatar or an account name. The terminal displays the second prompt information based on the indication information, such that the user can know, based on the second prompt information, whether the content to be modified is the account avatar or the account name, and perform corresponding modification. The interface shown in FIG. 7 is still taken as an example. The second prompt information displayed in the interface shown in FIG. 7 displays the indication information indicating whether the content to be modified is the account avatar or the account name.

In some embodiments, the server adds a second label to the target viewer account in response to sending the second prompt information to the terminal. The second label is configured to indicate that the target viewer account is a reminded viewer account. That is, the second label is configured to indicate that the second prompt information has been sent to the target viewer account.

By adding the second label to the reminded target viewer account, it is unnecessary to make a subsequent reminder that the target viewer account for which the second label has been added, thereby reducing the processing stress of the server. The processing speed of live-streaming data and the intelligence of live-streaming data processing are improved, and repeated reminders are reduced, thereby improving user experience.

With the technical solutions of the embodiments of the present disclosure, by displaying an account avatar of a target viewer account in a live-streaming room as a predetermined avatar, and displaying an account name of the target viewer account as a predetermined account name, the cases where the target viewer account lures other viewer accounts to jump to his/her own live-streaming room by using his/her account avatar and account name is reduced, thereby reducing loss of users in a current live-streaming room and improving the intelligence of live-streaming room management.

The above processes shown in FIG. 4 are processes of displaying the account avatar of the target viewer account as the predetermined avatar and displaying the account name of the target viewer account as the predetermined account name based on interaction between the terminal and the server. During the above processes, the target viewer account is determined by the server. The following describes a process in which the server determines the target viewer account. FIG. 8 is a flowchart of a method for processing live-streaming data according to an exemplary embodiment. Referring to FIG. 8, the method includes the following processes.

In S801, the server acquires viewer accounts in a live-streaming room at a current moment and viewer accounts in the live-streaming room at a moment of the first predetermined duration before the current moment.

At the same moment, there may be a plurality of live-streaming rooms that provide live streaming at the same time. For any one of the plurality of live-streaming rooms, the server acquires a type and a number of virtual commodities presented by each viewer account in the live-streaming room; determines, based on the type and the number of the virtual commodities presented by each viewer account, values of the virtual commodities presented by each viewer account; sequences a plurality of viewer accounts in the live-streaming room based on the values of the virtual commodities presented by each viewer account; and acquires a list of viewer accounts of the live-streaming room by acquiring top viewer accounts of a second predetermined number based on a sequenced result. In the case that a number of viewer accounts in the live-streaming room is smaller than the second predetermined number, the server directly uses the sequenced result as the list of viewer accounts of the live-streaming room. In response to determining the list of viewer accounts in each live-streaming room, the server stores the list of viewer accounts in each live-streaming room to a cache, such that the list of viewer accounts in each live-streaming room can be directly acquired from the cache when there is a need.

In some embodiments, the server acquires, at every first predetermined duration, a list of viewer accounts in each live-streaming room at a current moment that provides live streaming currently; and acquires, from the cache, the list of viewer accounts of the live-streaming room that provides the live streaming before the first predetermined duration.

In S802, the server determines at least one candidate viewer account based on the viewer accounts in the live-streaming room at the current moment and the viewer accounts in the live-streaming room at the moment of the first predetermined duration before the current moment.

The term "at least one" includes one and more. For example, the at least one candidate viewer account includes one or more viewer accounts.

In S801 and S802, by acquiring the viewer accounts in the live-streaming room at the current moment and the viewer accounts in the live-streaming room before the first predetermined duration, a newly added viewer account in the live-streaming room within the first predetermined duration can be determined based on the viewer accounts at the two moments, thereby determination of the candidate viewer account can be realized. By determining the candidate viewer account by acquiring the list of viewer accounts at the current moment and the list of viewer accounts at the moment of the first predetermined duration before the current moment from the cache and automatically comparing the list of viewer accounts at the current moment and the list of viewer accounts before the first predetermined duration, manual processing is not required, such that the processing speed of live-streaming data is improved and the processing stress of related technical personnel is reduced.

In some embodiments, the server determines at least one newly added viewer account in the live-streaming room within the first predetermined duration based on the viewer accounts in the live-streaming room at the current moment and the viewer accounts in the live-streaming room at the moment of the first predetermined duration before the current moment; acquires the at least one candidate viewer account by filtering out, from the at least one newly added viewer account, a viewer account whose account avatar and account name have been replaced and a viewer account that has been identified within a second predetermined duration before the current moment.

The second predetermined duration is any duration. For example, the second predetermined duration is 1 hour or another value, which is not limited in the embodiments of the present disclosure.

By determining the at least one newly added viewer account in the live-streaming room within the first predetermined duration, and filtering out, from the at least one viewer account, the viewer account whose account avatar and account name have been replaced and the viewer account identified within the second predetermined duration before the current moment, account avatars and account names of these accounts do not need to be identified subsequently, thereby reducing the processing stress of a server and improving the processing speed of data.

In some embodiments, upon determining the at least one candidate viewer account, the server acquires an account avatar and an account name of the at least one candidate viewer account, and adds the account avatar and the account name of the at least one candidate viewer account to a distributed message queue. Therefore, the server acquires the account avatar and the account name of the at least one candidate viewer account from the distributed message queue, and identifies the account avatar and the account name of the at least one candidate viewer account.

In some embodiments, for implementation of processes S801 to S802, an interior of the server is divided into different components. The different components are configured to provide different functions, such that the different components jointly implement a process of determining the candidate viewer account and reporting the candidate viewer account for checking in processes S801 and S802. FIG. 9 is a schematic flowchart of a report-for-checking logic according to an exemplary embodiment. Referring to the report-for-checking logic shown in FIG. 9, the interior of the server is divided into a live-streaming service, a slicing task, a distributed message queue, a negative feedback label system, a signaling service, a risk control system, and a database and cache. Processes S801 and S802 include the following processes. In 901, the live-streaming service acquires a current ranking list of a live-streaming room (namely, a list of viewer accounts) from the slicing task. In 902, the slicing task returns the current ranking list of the live-streaming room to the live-streaming service. In 903, the slicing task acquires a last ranking list of the live-streaming room (namely, a list of viewer accounts before a first predetermined duration) from the database and cache. In 904, the database and cache return the last ranking list of the live-streaming room to the slicing task. In 905, the slicing task acquires all target viewer accounts from the risk control system. In 906, the risk control system returns the target viewer account to the slicing task. In 907, the slicing task filters out the target viewer account and a checked account. In 908, the slicing task sends an account left (namely, an account to be reported for checking or a candidate viewer account) to the distributed message queue. Then, the server checks an account received to be reported for checking through the distributed message queue, to determine whether the target viewer account exists in the account to be reported for checking.

In S803, the server identifies the target viewer account whose account avatar or account name includes content to be modified from the at least one candidate viewer account.

In some embodiments, the server acquires an account avatar and an account name of each of candidate accounts from the distributed message queue, and identifies the account avatar and the account name in the distributed message queue to determine the target viewer account.

Identification of the account avatar and the account name of the at least one candidate viewer account is realized by using a model or an algorithm or realized in another fashion, which is not limited in the embodiments of the present disclosure. Identification of the account avatar and the account name being realized by using a model is taken as an example. Different models are used for identifying the account avatar and the account name. For example, an image identification model is used for identifying the account avatar, and a character identification model is used for identifying the account name. Both the image identification model and the character identification model are convolutional neural network (CNN). However, the CNN used as the image identification model and the CNN used as the character identification model use different model parameters. Optionally, the image identification model and the character identification model are neural network models of different types, which is not limited in the embodiments of the present disclosure.

Both the image identification model and the character identification model being CNNs is taken as an example. Both of the image identification model and the character identification model include an input layer, a convolutional layer, a pooling layer, and a full connection layer. A process of identifying the account avatar being performed by using the image identification model is taken as an example. The terminal inputs an account avatar to be identified to the input layer of the image identification model, to extract an image feature of the account avatar through the input layer; inputs the image feature of the account avatar to the convolutional layer, to acquire a convolutional feature corresponding to the image feature by performing convolutional processing on the image feature through the convolutional layer; inputs the convolutional feature to the pooling layer, to perform dimension reduction processing on the convolutional feature through the pooling layer; and inputs a convolutional feature acquired upon the dimension reduction processing to the full connection layer, such that whether the account avatar includes the content to be modified is determined through the full connection layer based on the convolutional feature acquired upon the dimension reduction processing. Therefore, identification of the account avatar is realized. A process of identifying the account name is similar to the above process, and details are not described herein again.

The image identification model and the character identification model are acquired respectively by training based on corresponding training sets. Details of specific training processes are not described in the present disclosure.

The image identification model and the character identification model are trained to identify a word/image that may be used by the target viewer account to lure other viewer accounts. In some embodiments, the training set of the image identification model includes at least one training sample, and each of the at least one training sample includes a sample account avatar and a sample label corresponding to the sample account avatar. The sample label is configured to indicate whether the sample account avatar includes content to be modified. The image identification model is trained based on the training set, such that the image identification model can learn a relationship between the sample account avatar and the sample label corresponding to the sample account avatar. In this way, the image identification model is capable of determining whether the content to be modified is included in an account avatar. Similarly, the training set of the character identification model includes at least one training sample, and each of the at least one training sample includes a sample account name and a sample label corresponding to the sample account name. The sample label is configured to indicate whether the sample account name includes the content to be modified. The character identification model is trained based on the training set, such that the character identification model can learn a relationship between the sample account name and the sample label corresponding to the sample account name. In this way, the character identification model is capable of determining whether the content to be modified is included in an account name. In some embodiments, the content to be modified refers to an image or a word luring a viewer account.

By identifying the account avatar and the account name of the candidate viewer account, the target viewer account can be determined, such that the terminal can subsequently display the account avatar of the target viewer account as the predetermined avatar, and display the account name of the target viewer account as the predetermined account name, thereby improving the intelligence of live-streaming room management.

The above exemplarily describes identification of the account avatar and the account name. In some other embodiments, the account avatar and the account name are identified in other fashions, which is not limited in the embodiments of the present disclosure.

In some embodiments, the server adds a first label to an identified viewer account. The first label is configured to indicate that the viewer account has been identified.

By adding the first label to the identified viewer account, subsequent identification of the viewer account for which the first label has been added is avoided, thereby reducing the processing workload of the server, and improving the processing speed of live-streaming data.

In S804, the server adds a target label to the target viewer account, wherein the target label is configured to indicate that the account name and the account avatar of the target viewer account are to be replaced.

Processes S801 to S804 are performed once by the server at every first predetermined duration, to guarantee real-time performance of the determined target label. By adding the target label to the target viewer account, when the server sends a first predetermined number of account avatars or the list of viewer accounts, the server performs corresponding processing on the first predetermined number of account avatars or the list of viewer accounts based on whether there is a target viewer account carrying the target label in the first predetermined number of account avatars or the viewer accounts corresponding to the list of viewer accounts.

For a viewer account in the live-streaming room, in the case that the viewer account enters the live-streaming room, a terminal corresponding to the viewer account establishes a long connection to the server. The long connection exists in an entire process in which the viewer account watches live streaming in the live-streaming room. The server sends the first predetermined number of account avatars in the live-streaming room to the terminal at every first predetermined duration from a moment when the viewer account enters the live-streaming room, thereby realizing real-time updating of account avatars displayed in the live-streaming interface of the terminal.

In some embodiments, during a process that the server actively sends the first predetermined number of account avatars to the terminal through the long connection, in the case that the account avatar of the target viewer account exists in the first predetermined number of account avatars, the server replaces the account avatar of the target viewer account with the predetermined avatar, and then sends the first predetermined number of account avatars.

In the case that the target viewer account exists in viewer accounts corresponding to the first predetermined number of account avatars in the live-streaming room, the account avatar of the target viewer account is replaced with the predetermined avatar. Upon replacing the account avatar of the target viewer account with the predetermined avatar, a first predetermined number of account avatars including the predetermined avatar is sent to the terminal, such that the terminal can display the account avatar of the target viewer account as the predetermined avatar, thereby reducing the cases where the target viewer account attracts other viewer accounts to jump to his/her own live-streaming room by using his/her account avatar, reducing loss of users in a current live-streaming room, and improving the intelligence of live-streaming room management.

During the process of sending the account avatar through the long connection, the long connection can directly perform data transmission, and no input/output (IO) needs to be added, such that time consumed in transparent transmission of the account avatar through the long connection is reduced, thereby reducing the processing stress of the server, and improving the processing speed of the server. Therefore, the processing speed of the live-streaming data is improved.

In some embodiments, in response to receiving a list acquiring request of the terminal, the server acquires a list of viewer accounts in a corresponding live-streaming room, and sends the list of viewer accounts to the terminal, wherein the list of viewer accounts includes account avatars and account names of viewer accounts in the live-streaming room. In the case that the target viewer account exists in the list of viewer accounts, the list of viewer accounts further includes the target label of the target viewer account. In this way, based on the target label, the terminal can display the account avatar of the target viewer account as the predetermined avatar and/or display the account name of the target viewer account as the predetermined account name.

The above process in which the terminal interacts with the server by the list acquiring request is realized through an application programming interface (API). In addition, in response to determining the list of viewer accounts, the server adds the target label to the target viewer account. Therefore, in response to receiving the list acquiring request, the server directly sends the determined list of viewer accounts and target label of the target viewer account to the terminal through the API. The terminal does not need to request the target label from the server, such that no IO needs to be added. In this way, the processing stress of the terminal and the server is reduced, and the processing speeds of the terminal and the server are improved, thereby improving the processing speed of live-streaming data.

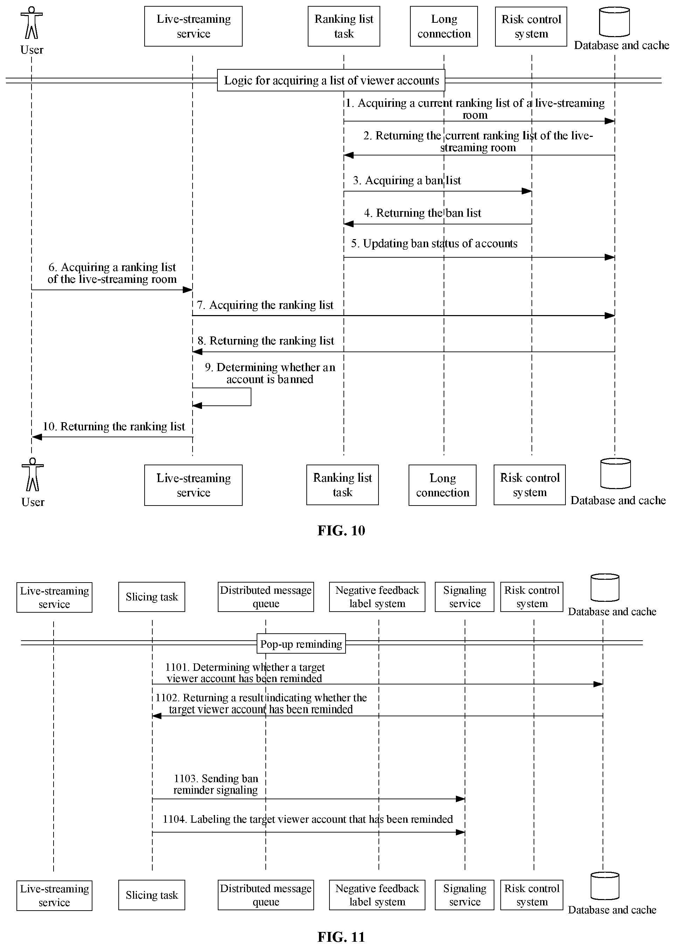

The above processes in which the terminal acquires the list of viewer accounts by interacting with the server can be referred to FIG. 10. FIG. 10 is a schematic flowchart of a logic for acquiring a list of viewer accounts according to an exemplary embodiment. Based on the logic for acquiring a list of viewer accounts (namely, a ranking list) shown in FIG. 10, an interior of the server is divided into a live-streaming service, a ranking list task, a long connection, a risk control system, and a database and cache. During processes in which the terminal acquires the list of viewer accounts by interacting with the server, the server acquires a current ranking list of a live-streaming room (namely, the list of viewer accounts) from the database and cache through the ranking list task, and the database and cache returns the current ranking list of the live-streaming room to the ranking list task. Then, the server acquires a ban list (namely, a list of target viewer accounts) from the risk control system through the ranking list task; the risk control system returns the ban list to the ranking list task; and the ranking list task updates ban status of accounts in the database and cache based on the received ban list. Therefore, when the terminal requests a ranking list of live-streaming rooms from the live-streaming service, an updated ranking list is acquired from the database and cache through the live-streaming service, and the acquired ranking list is returned to the terminal.

In some embodiments, processes in which the terminal acquires the list of viewer accounts by interacting with the server include the following processes. In 1001, the ranking list task acquires a current ranking list of a live-streaming room (namely, the list of viewer accounts) from the database and cache. In 1002, the database and cache return the current ranking list of the live-streaming room to the ranking list task. In 1003, the ranking list task acquires a ban list (namely, a list of target viewer accounts) from the risk control system. In 1004, the risk control system returns the ban list to the ranking list task. In 1005, the ranking list task updates ban status of accounts in the database and cache based on the received ban list. For example, the ranking list task marks status of accounts in the ban list of the current ranking list of the live-streaming room as account being banned. In 1006, the terminal requests a ranking list of the live-streaming room from the live-streaming service. In 1007, the live-streaming service acquires a ranking list from the database and cache. In 1008, the database and cache return the ranking list of the live-streaming room to the live-streaming service. In 1009, the live-streaming service updates the ranking list of the live-streaming room, that is, the live-streaming service acquires an updated ranking list of the live-streaming room by adding a target label to a banned account in the ranking list of the live-streaming room. In 1010, the live-streaming service returns the updated ranking list to the terminal.

In some embodiments, in response to sending the list of viewer accounts carrying the target label to the terminal, the server sends second prompt information to a terminal to which a target viewer account is logged in, such that the terminal can display the second prompt information. The second prompt information is configured to indicate that the content to be modified exists in the account avatar or the account name of the target viewer account.

For the process of sending the second prompt information, reference may be made to FIG. 11. FIG. 11 is a schematic flowchart of a logic for pop-up reminding according to an exemplary embodiment. Based on the logic for pop-up reminding shown in FIG. 11, the interior of the server is divided into a live-streaming service, a slicing task, a distributed message queue, a negative feedback label system, a signaling service, a risk control system, and a database and cache. Process that the server sends the second prompt information includes the following processes. In 1101, the slicing task determines, based on content stored in the database and cache, whether a banned account (a target viewer account) has been reminded. In 1102, the database and cache return, to the slicing task, a result indicating whether the banned account has been reminded. In 1103, in the case that a target viewer account has not been reminded, the slicing task sends ban reminder signaling to the signaling service, such that the second prompt information can be sent through the signaling service. In 1104, in the case that the ban reminder signaling is sent to the signaling service, the slicing task labels the target viewer account that has been reminded through the signaling service, thereby reducing repeated reminders.

In some cases, some viewer accounts in the live-streaming room may attempt to induce other viewers by setting up account avatars and account names and presenting gifts to the anchor, such that their account avatars and account names appear in the viewer ranking list. In this way, the account avatars and the account names of these viewers are visible or noticeable to other viewer accounts in the live-streaming room, and other viewer accounts in the live-streaming room may jump to their live-streaming rooms, which causes loss of users in the current live-streaming room.

With the technical solutions of the embodiments of the present disclosure, in the case that the target viewer account exists in the newly added candidate viewer account in the live-streaming room within the first predetermined duration, by adding the target label to the target viewer account, the list of viewer accounts including the target label can be sent when the list of viewer accounts is subsequently sent to the each terminal in the live-streaming room. In this way, the terminal can display, based on the target label in the received list of viewer accounts, the account avatar of the target viewer account in the list of viewer accounts as a predetermined avatar, and the account name of the target viewer account as a predetermined account name. Therefore, the cases where the target viewer account attracts other viewer accounts to jump to his/her own live-streaming room by using his/her account avatar and account name are reduced, thereby reducing loss of users in a current live-streaming room and improving the intelligence of live-streaming room management. In addition, with the technical solutions of the embodiments of the present disclosure, by setting the target label of the target viewer account during determining the list of viewer accounts, that is, converging a process of setting the target label to a process of building a list of viewer accounts, the target label can be directly sent to the terminal during sending the list of viewer accounts, and the terminal does not need to request the target label, thereby reducing the communication stress of a network between the terminal and the server.

With the technical solutions of the embodiments of the present disclosure, the terminals in the live-streaming room can display the account avatar and the account name of the viewer account as a predetermined avatar and a target viewer account if the terminals determine that this viewer account has the target label. The displayed predetermined avatar or the predetermined account name or both the predetermined avatar and the predetermined account name are different from the original avatar and the original account name. In some embodiments, the predetermined avatar and the predetermined account name composed of symbols, characters, images or other form of representations that are different from the original account avatar and original account name. Because the real information intended by the target viewer account is not displayed, other viewers in the live-streaming room would not be attracted to the target account. In some embodiments, a personal home page of the target account is prohibited to be accessed. Therefore, the cases where the target viewer account attracts other viewer accounts to jump to his/her own live-streaming room by using his/her account avatar and account name are reduced, thereby reducing loss of users in a current live-streaming room and improving the intelligence of live-streaming room management.

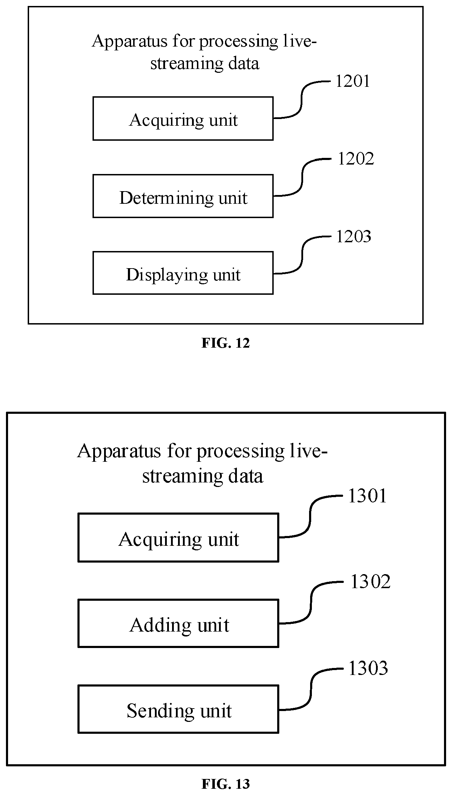

FIG. 12 is a block diagram of an apparatus for processing live-streaming data according to an exemplary embodiment. Referring to FIG. 12, the apparatus includes:
an acquiring unit 1201, configured to acquire a list of viewer accounts in a live-streaming room, wherein the list of viewer accounts includes account names and account avatars of the viewer accounts in the live-streaming room;
a determining unit 1202, configured to, in the case that a target viewer account exists in the list of viewer accounts, determine a predetermined avatar and a predetermined account name, wherein the target viewer account is a viewer account carrying a target label, and the target label is configured to indicate that the account name and the account avatar of the target viewer account are to be replaced; and
a displaying unit 1203, configured to display the viewer accounts in the live-streaming room based on the list of viewer accounts, wherein the account avatar of the target viewer account is displayed as the predetermined avatar, and the account name of the target viewer account is displayed as the predetermined account name.

With the apparatus of the embodiments of the present disclosure, by displaying an account avatar of a target viewer account in a live-streaming room as a predetermined avatar, and displaying an account name of the target viewer account as a predetermined account name, cases where the target viewer account lures other viewer accounts to jump to his/her own live-streaming room by using his/her account avatar and account name are reduced, thereby reducing loss of users in a current live-streaming room and improving the intelligence of live-streaming room management.

In some embodiments, the acquiring unit 1201 is configured to display a list display control and a first predetermined number of account avatars, and acquire the list of viewer accounts of the live-streaming room in response to a trigger operation on the list display control.

In some embodiments, the acquiring unit 1201 is configured to, in the case that the account avatar of the target viewer account exists in the first predetermined number of account avatars, display the account avatar of the target viewer account as the predetermined avatar during displaying the first predetermined number of account avatars.

In some embodiments, the displaying unit 1203 is further configured to, in response to a trigger operation on the predetermined avatar or the predetermined account name, display first prompt information, wherein the first prompt information is configured to indicate that the account avatar and the account name of the target viewer account have been replaced.

In some embodiments, the displaying unit 1203 is further configured to display the second prompt information, wherein the second prompt information is configured to indicate that content to be modified exists in an account avatar or an account name of an account logged on to a terminal.

FIG. 13 is a block diagram of an apparatus for processing live-streaming data according to an exemplary embodiment. Referring to FIG. 13, the apparatus includes:
an acquiring unit 1301, configured to acquire at least one candidate viewer account in a live-streaming room, wherein the at least one candidate viewer account includes a newly added viewer account in the live-streaming room within a first predetermined duration;
an adding unit 1302, configured to add a target label to a target viewer account in the at least one candidate viewer account, wherein the target viewer account is a viewer account whose account avatar or account name comprises content to be modified, and the target label is configured to indicate that an account name and an account avatar of the target viewer account are to be replaced; and
a sending unit 1303, configured to send a list of viewer accounts of the live-streaming room, wherein the list of viewer accounts includes account avatars and account names of the viewer accounts in the live-streaming room and the target label of the target viewer account.

With the technical solutions of the embodiments of the present disclosure, in the case that the target viewer account whose account name and account avatar are to be replaced exists in the newly added candidate viewer account in the live-streaming room within the first predetermined duration, by adding the target label to the target viewer account and sending the list of viewer accounts including the target label, the terminal can display, based on the target label in the received list of viewer accounts, the account avatar of the target viewer account in the list of viewer accounts of the live-streaming room as a predetermined avatar, and the account name of the target viewer account as a predetermined account name. Therefore, the cases where the target viewer account lures other viewer accounts to jump to his/her own live-streaming room by using his/her account avatar and account name are reduced, thereby reducing loss of users in a current live-streaming room and improving the intelligence of live-streaming room management.

In some embodiments, the acquiring unit 1301 includes an acquiring sub-unit and a determining sub-unit.

The acquiring sub-unit is configured to acquire viewer accounts in the live-streaming room at a current moment and viewer accounts in the live-streaming room before a first predetermined duration.

The determining sub-unit is configured to determine the at least one candidate viewer account based on the viewer accounts in the live-streaming room at the current moment and the viewer accounts in the live-streaming room before the first predetermined duration.

In some embodiments, the determining sub-unit is configured to determine the at least one newly added viewer account in the live-streaming room within the first predetermined duration , and acquire the at least one candidate viewer account by filtering out, from the at least one newly added viewer account, a viewer account whose account avatar and account name have been replaced and a viewer account that has been identified within a second predetermined duration before the current moment.

In some embodiments, the apparatus further includes:
an identifying unit, configured to identify the target viewer account whose account avatar or account name includes the content to be modified from the at least one candidate viewer account.

In some embodiments, the adding unit 1302 is further configured to add a first label to an identified viewer account, wherein the first label is configured to indicate that the viewer account has been identified.

In some embodiments, the sending unit 1303 is further configured to send a first predetermined number of account avatars in the live-streaming room to the terminal in the case that an account logged on to the terminal enters the live-streaming room;
wherein, the account avatar of the target viewer account in the first predetermined number of account avatars has been replaced with the predetermined avatar.

In some embodiments, the sending unit 1303 is further configured to send second prompt information to a terminal to which the target viewer account is logged in, wherein the second prompt information is configured to indicate that content to be modified exists in the account avatar or the account name of the target viewer account.

In some embodiments, the adding unit 1302 is further configured to add a second label to the target viewer account, wherein the second label is configured to indicate that the second prompt information has been sent to the target viewer account.

Operations performed by the modules in the apparatus in the above embodiments have been described in detail in the embodiments of the related method, and details are not described herein.

An embodiment of the present disclosure provides a terminal. The terminal includes a processor and a memory configured to store on or more instructions executable by the processor. The processor, when loading and executing the one or more instructions, is caused to perform the methods for processing live-streaming data according to the method embodiments of the present disclosure.

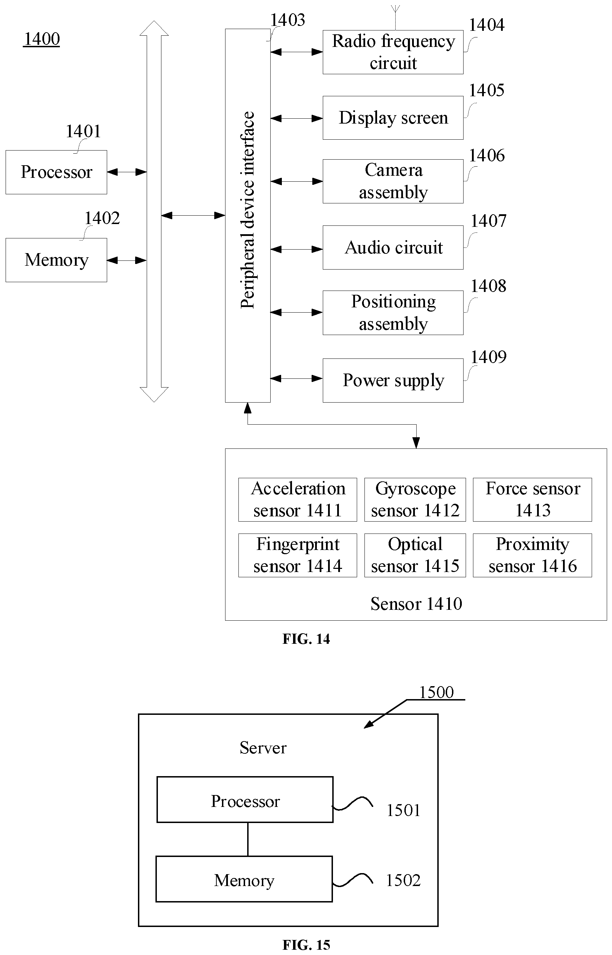

FIG. 14 is a block diagram of a terminal 1400 according to an exemplary embodiment. In some embodiments, the terminal 1400 is a smart mobile phone, a tablet computer, a Moving Picture Experts Group Audio Layer III (MP3) player, a Moving Picture Experts Group Audio Layer Iv (MP4) player, a laptop computer, or a desktop computer. The terminal 1400 may also be referred to as a user equipment, a portable terminal, a laptop terminal, a desktop terminal.

Generally, the terminal 1400 includes one or more processors 1401 and one or more memories 1402.

In some embodiments, the processor 1401 includes one or more processing cores, such as a quad-core processor and an eight-core processor. In some embodiments, the processor 1401 is implemented in at least one hardware form of a digital signal processor (DSP), a field-programmable gate array (FPGA), and a programmable logic array (PLA). In some embodiments, the processor 1401 includes a main processor and a coprocessor. The main processor is a processor configured to process data in an awake state, and is also referred to as a central processing unit (CPU). The coprocessor is a low-power-consumption processor configured to process data in a standby state. In some embodiments, the processor 1401 is integrated with a graphics processing unit (GPU). The GPU is configured to render and draw content that needs to be displayed by a display screen. In some embodiments, the processor 1401 further includes an Artificial Intelligence (AI) processor. The AI processor is configured to process computational operations related to machine learning.

In some embodiments, the memory 1402 includes one or more computer-readable storage medium. For example, the computer-readable storage medium is non-transitory computer-readable storage medium. In some embodiments, the memory 1402 further includes a high-speed random-access memory and a non-volatile memory such as one or more magnetic disk storage devices and flash storage devices. In some embodiments, the non-transitory computer-readable storage medium in the memory 1402 is configured to store at least one program code. The at least one program code is configured to be executed by the processor 1401 to perform the method for processing live-streaming data according to the method embodiments of the present disclosure.

In some embodiments, the terminal 1400 further includes: a peripheral device interface 1403 and at least one peripheral device. The processor 1401, the memory 1402, and the peripheral device interface 1403 are connected by a bus or a signal line. Each peripheral device is connected to the peripheral device interface 1403 by a bus, a signal line or a circuit board. In some embodiments, the peripheral device includes: at least one of a radio frequency circuit 1404, a display screen 1405, a camera assembly 1406, an audio circuit 1407, a positioning assembly 1408 and a power supply 1409.

In some embodiments, the peripheral device interface 1403 is configured to connect at least one peripheral device associated with an input/output (I/O) to the processor 1401 and the memory 1402. In some embodiments, the processor 1401, the memory 1402 and the peripheral device interface 1403 are integrated on the same chip or circuit board. In some embodiments, any one or two of the processor 1401, the memory 1402 and the peripheral device interface 1403 may be implemented on a separate chip or circuit board, which is not limited in the present embodiment.

The radio frequency circuit 1404 is configured to receive and transmit a radio frequency (RF) signal, also referred to as an electromagnetic signal. The radio frequency circuit 1404 communicates with a communication network and other communication devices via the electromagnetic signal. The radio frequency circuit 1404 converts the electrical signal to the electromagnetic signal for transmission, or converts the electromagnetic signal to the electrical signal. In some embodiments, the radio frequency circuit 1404 includes: an antenna system, an RF transceiver, one or more amplifiers, a tuner, an oscillator, a digital signal processor, a coder/decoder (codec) chipset, a subscriber identity module card, and the like. In some embodiments, the radio frequency circuit 1404 communicates with other terminals in accordance with at least one wireless communication protocol. The wireless communication protocol includes: a metropolitan area network (MAN), various generations of mobile communication networks (2G, 3G, 4G, and 5G), a wireless local area network (LAN), and/or a wireless fidelity (Wi-Fi) network. In some embodiments, the radio frequency circuit 1404 further includes a circuit related to near-field communication (NFC), which is not limited in the present disclosure.

The display screen 1405 is configured to display a user interface (UI). In some embodiments, the UI includes a graph, a text, an icon, a video, and any combination thereof. In the case that the display screen 1405 is a touch display screen, the display screen 1405 further has a function of acquiring a touch signal on or over the surface of the display screen 1405. The touch signal is input as a control signal to the processor 1401 for processing. In some embodiments, the display screen 1405 is further configured to provide a virtual button and/or a virtual keyboard, which is also referred to as a soft button and/or a soft keyboard. In some embodiments, the display screen 1405 is provided as one screen disposed on a front panel of the terminal 1400. In some other embodiments, the display screens 1405 is provided as at least two screens disposed respectively on different surfaces of the terminal 1400 or designed as folded. In other embodiments, the display screen 1405 is a flexible display screen disposed on the curved surface or a folded surface of the terminal 1400. In some embodiments, the display screen 1405 is provided as a non-rectangular pattern, that is, an irregular-shaped screen. In some embodiments, the display screen 1405 is a liquid crystal display (LCD) screen, an organic light-emitting diode (OLED) screen, or the like.

The camera assembly 1406 is configured to capture an image or a video. In some embodiments, the camera assembly 1406 includes a front camera and a rear camera. In some embodiments, the front camera is disposed on a front panel of the terminal, and the rear camera is disposed on a rear surface of the terminal. In some embodiments, there are at least two rear cameras, i.e., a main camera, a depth-of-field camera, a wide-angle camera, and a telephoto camera, to implement a background blur function by combining of the main camera and the depth-of-field camera, a panoramic shooting function and a virtual reality (VR) shooting function by combining of the main camera and the wide-angle camera, or other fusion shooting functions. In some embodiments, the camera assembly 1406 further includes a flashlight. The flashlight is a single-color-temperature flashlight or a dual-color-temperature flashlight. The dual-color-temperature flashlight is a combination of a warm flashlight and a cold flashlight, and can provide light compensation for different color temperatures.

In some embodiments, the audio circuit 1407 includes a microphone and a speaker. The microphone is configured to acquire sound waves of a user and an environment, convert the sound waves into electrical signals, and input the electrical signals into the processor 1401 for processing, or input the electrical signals into the radio frequency circuit 1404 to implement voice communication. In some embodiments, for the purpose of stereo acquisition or noise reduction, a plurality of microphones is provided and respectively disposed at different parts of the terminal 1400. In some embodiments, the microphone is an array microphone or an omnidirectional acquisition microphone. The speaker is configured to convert electrical signals from the processor 1401 or the radio frequency circuit 1404 into sound waves. In some embodiments, the speaker is a conventional film speaker or a piezoelectric ceramic speaker. In the case that the speaker is the piezoelectric ceramic speaker, the electrical signal can be converted into not only human-audible sound waves, but also the sound waves which are inaudible to humans for the purpose of ranging and the like. In some embodiments, the audio circuit 1407 further includes a headphone jack.

The positioning assembly 1408 is configured to determine a current geographic location of the terminal 1400 to implement navigation or location based service (LBS). In some embodiments, the positioning assembly 1408 is a positioning assembly based on the United States' Global Positioning System (GPS), China's Beidou Navigation Satellite System, Russia's Global Navigation Satellite System (GLONASS), or the European Union's Galileo Satellite Navigation System (Galileo).

The power supply 1409 is configured to supply power for various assemblies in the terminal 1400. In some embodiments, the power supply 1409 is alternating current, direct current, a disposable battery, or a rechargeable battery. In the case that the power supply 1409 includes the rechargeable battery, the rechargeable battery can be charged in a wired mode or a wireless mode. The rechargeable battery can also support the fast-charging technology.

In some embodiments, the terminal 1400 further includes one or more sensors 1410. The one or more sensors 1410 include: an acceleration sensor 1411, a gyroscope sensor 1412, a force sensor 1413, a fingerprint sensor 1414, an optical sensor 1415 and a proximity sensor 1416.

The acceleration sensor 1411 is configured to detect magnitude of accelerations on three coordinate axes of a coordinate system established by the terminal 1400. For example, the acceleration sensor 1411 is configured to detect components of a gravitational acceleration on the three coordinate axes. The processor 1401 can control the display screen 1405 to display a user interface in a lateral view or a vertical view based on gravitational acceleration signals acquired by the acceleration sensor 1411. The acceleration sensor 1411 is further configured to acquire motion data of a game or a user.

The gyroscope sensor 1412 is configured to detect a body direction and a rotational angle of the terminal 1400. In some embodiments, the gyroscope sensor 1412 cooperates with the acceleration sensor 1411 to acquire a 3D action of the user on the terminal 1400. In some embodiments, based on the data acquired by the gyroscope sensor 1412, the processor 1401 implements the following functions: motion sensing (such as changing the UI based on a user's tilt operation), image stabilization during shooting, game control and inertial navigation.

In some embodiments, the force sensor 1413 is disposed on a side frame of the terminal 1400 and/or a layer under the display screen 1405. In the case that the force sensor 1413 is disposed on the side frame of the terminal 1400, a user's holding signal to the terminal 1400 can be detected. The processor 1401 can perform left/right hand recognition or a quick operation based on the holding signal acquired by the force sensor 1413. In the case that the force sensor 1413 is disposed on the layer under the display screen 1405, the processor 1401 controls an operable control on the UI based on a user's press operation on the display screen 1405. The operable control includes at least one of a button control, a scroll bar control, an icon control, and a menu control.

The fingerprint sensor 1414 is configured to acquire a user's fingerprint. The user's identity is identified by the processor 1401 or by the fingerprint sensor 1414 based on the fingerprint acquired by the fingerprint sensor 1414. In the case that the user's identity is identified as a trusted identity, the user is authorized by the processor 1401 to perform a related sensitive operation, such as unlocking the screen, viewing encrypted information, downloading software, payment, and changing settings. In some embodiments, the fingerprint sensor 1414 is disposed on the front, rear, or side surface of the terminal 1400. In some embodiments, in the case that the terminal 1400 is provided with a physical button or its manufacturer's Logo, the fingerprint sensor 1414 is integrated with the physical button or its manufacturer's Logo.

The optical sensor 1415 is configured to acquire intensity of ambient light. In one embodiment, the processor 1401 controls the display brightness of the display screen 1405 based on the intensity of ambient light acquired by the optical sensor 1415. Specifically, in the case that the intensity of ambient light is high, the display brightness of the display screen 1405 is increased; and in the case that the intensity of ambient light is low, the display brightness of the display screen 1405 is decreased. In another embodiment, the processor 1401 is configured to dynamically adjust shooting parameters of the camera assembly 1406 based on the intensity of ambient light acquired by the optical sensor 1415.

The proximity sensor 1416, also referred to as a distance sensor, is generally disposed on the front panel of the terminal 1400. The proximity sensor 1416 is configured to acquire a distance between a user and the front surface of the terminal 1400. In one embodiment, in the case that the distance between the user and the front surface of the terminal 1400 detected by the proximity sensor 1416 gradually decreases, the display screen 1405 is controlled by the processor 1401 to switch from a screen-on state to a screen-off state. In the case that the distance between the user and the front surface of the terminal 1400 detected by the proximity sensor 1416 gradually increases, the display screen 1405 is controlled by the processor 1401 to switch from the screen-off state to the screen-on state.

It can be understood by those skilled in the art that the structure shown in FIG. 14 does not constitute a limitation to the terminal 1400. More or less components than those illustrated may be included in the terminal 1400, or some components in the terminal 1400 may be combined, or different component arrangements in the terminal 1400 may be provided.

An embodiment of the present disclosure provides a server. The server includes a processor and a memory configured to store on or more instructions executable by the processor. The processor, when loading and executing the one or more instructions, is caused to perform the methods for processing live-streaming data according to the method embodiments of the present disclosure.

FIG. 15 is a block diagram of a server 1500 according to an exemplary embodiment. Significant differences may be generated when the server 1500 has different configurations or performances. In some embodiments, the server 1500 includes one or more processors (CPUs) 1501 and one or more memories 1502 storing at least one of program code therein. The at least one of program code, when loaded and executed by the one or more processors 1501, cause the one or more processors 1501 to perform the method for processing live-streaming data according to each of the above method embodiments. In some embodiments, the server 1500 further includes components such as a wired or wireless network interface, a keyboard, and an input/output interface for input and output. In some embodiments, the server 1500 further includes other components for implementing device functions, which are not repeated herein.

In an exemplary embodiment, a computer-readable storage medium including instructions is provided, such as the memory 1402 including instructions. The instructions can be executed by the processor 1401 of the terminal 1400 to perform the above methods for processing live-streaming data. The computer-readable storage medium including instructions may be the memory 1502 including instructions. The instructions can be executed by the processor 1501 of the server 1500 to perform the above methods for processing live-streaming data. In some embodiments, the computer-readable storage medium may be a read-only memory (ROM), a random-access memory (RAM), a compact disc read-only memory (CD-ROM), a magnetic tape, a floppy disc, an optical data storage device or the like.

In an exemplary embodiment, a computer program product including a computer program is further provided, wherein the computer program, when executed by a processor of a terminal, cause the terminal to perform the processes of the method for processing live-streaming data executed by the above terminal. Or the computer program, when executed by a processor of a server, cause the server to perform the processes of the method for processing live-streaming data executed by the above server.

All the embodiments of the present disclosure may be practiced individually or in combination with other embodiments, and these embodiments are all regarded as being within the protection scope of the present disclosure.

## Claims

1. A method for processing live-streaming data, **characterized by** comprising:
acquiring (S201) a list of viewer accounts of a live-streaming room, wherein the list of viewer accounts comprises account names and account avatars of the viewer accounts in the live-streaming room;
in the case that a target viewer account exists in the list of viewer accounts, determining (S202) a predetermined avatar and a predetermined account name, wherein the target viewer account is a viewer account carrying a target label, and the target label is configured to indicate that the account name and the account avatar of the target viewer account are to be replaced; and
displaying (S203) the viewer accounts in the live-streaming room based on the list of viewer accounts, wherein the account avatar of the target viewer account is displayed as the predetermined avatar, and the account name of the target viewer account is displayed as the predetermined account name.

2. The method according to claim 1, wherein said acquiring (201) the list of viewer accounts of the live-streaming room comprises:
displaying a list display control and a first predetermined number of account avatars; and
acquiring the list of viewer accounts of the live-streaming room in response to a trigger operation on the list display control.

3. The method according to claim 2, wherein displaying the first predetermined number of account avatars comprises:
in the case that the account avatar of the target viewer account exists in the first predetermined number of account avatars, displaying the account avatar of the target viewer account as the predetermined avatar during displaying the first predetermined number of account avatars.

4. The method according to any one of claims 1 to 3, further comprising:
in response to a trigger operation on the predetermined avatar or the predetermined account name, displaying first prompt information, wherein the first prompt information is configured to indicate that the account avatar and the account name of the target viewer account have been replaced.

5. The method according to any one of claims 1 to 4, further comprising:
displaying second prompt information, wherein the second prompt information is configured to indicate that content to be modified exists in an account avatar or an account name of an account logged on to the terminal.

6. A method for processing live-streaming data, **characterized by** comprising:
acquiring (S301) at least one candidate viewer account in a live-streaming room, wherein the at least one candidate viewer account comprises a newly added viewer account in the live-streaming room within a first predetermined duration;
adding (S302) a target label to a target viewer account in the at least one candidate viewer account, wherein the target viewer account is a viewer account whose account avatar or account name comprises content to be modified, and the target label is configured to indicate that an account name and an account avatar of the target viewer account are to be replaced; and
sending (S303) a list of viewer accounts of the live-streaming room, wherein the list of viewer accounts comprises account avatars and account names of the viewer accounts in the live-streaming room and the target label of the target viewer account.

7. The method according to claim 6, wherein said acquiring (S301) the at least one candidate viewer account in the live-streaming room comprises:
acquiring viewer accounts in the live-streaming room at a current moment and viewer accounts in the live-streaming room at a moment of the first predetermined duration before the current moment; and
determining the at least one candidate viewer account based on the viewer accounts in the live-streaming room at the current moment and the viewer accounts in the live-streaming room at the moment of the first predetermined duration before the current moment.

8. The method according to claim 7, wherein said determining the at least one candidate viewer account based on the viewer accounts in the live-streaming room at the current moment and the viewer accounts in the live-streaming room at the moment of the first predetermined duration before the current moment comprises:
determining at least one newly added viewer account in the live-streaming room within the first predetermined duration; and
acquiring the at least one candidate viewer account by filtering out, from the at least one newly added viewer account, a viewer account whose account avatar and account name have been replaced and a viewer account that has been identified within a second predetermined duration before the current moment.

9. The method according to any one of claims 6 to 8, further comprising:
identifying the target viewer account whose account avatar or account name comprises the content to be modified from the at least one candidate viewer account.

10. The method according to claim 9, further comprising:
adding a first label to an identified viewer account, wherein the first label is configured to indicate that the viewer account has been identified.

11. The method according to any one of claims 6 to 8, further comprising:
sending a first predetermined number of account avatars in the live-streaming room to a terminal in the case that an account logged on to the terminal enters the live-streaming room;
wherein, the account avatar of the target viewer account in the first predetermined number of account avatars has been replaced with the predetermined avatar.

12. The method according to any one of claims 6 to 8, further comprising:
sending second prompt information to a terminal to which the target viewer account is logged in, wherein the second prompt information is configured to indicate that content to be modified exists in the account avatar or the account name of the target viewer account.

13. The method according to claim 12, further comprising:
adding a second label to the target viewer account, wherein the second label is configured to indicate that the second prompt information has been sent to the target viewer account.

14. An apparatus for processing live-streaming data, **characterized by** comprising:
an acquiring unit (1201), configured to acquire a list of viewer accounts of a live-streaming room, wherein the list of viewer accounts comprises account names and account avatars of the viewer accounts in the live-streaming room;
a determining unit (1202), configured to, in the case that a target viewer account exists in the list of viewer accounts, determine a predetermined avatar and a predetermined account name, wherein the target viewer account is a viewer account carrying a target label, and the target label is configured to indicate that the account name and the account avatar of the target viewer account are to be replaced; and
a displaying unit (1203), configured to display the viewer accounts in the live-streaming room based on the list of viewer accounts, wherein the account avatar of the target viewer account is displayed as the predetermined avatar, and the account name of the target viewer account is displayed as the predetermined account name.

15. An apparatus for processing live-streaming data, **characterized by** comprising:
an acquiring unit (1301), configured to acquire at least one candidate viewer account in a live-streaming room, wherein the at least one candidate viewer account comprises a newly added viewer account in the live-streaming room within a first predetermined duration;
an adding unit (1302), configured to add a target label to a target viewer account in the at least one candidate viewer account, wherein the target viewer account is a viewer account whose account avatar or account name comprises content to be modified, and the target label is configured to indicate that an account name and an account avatar of the target viewer account are to be replaced; and
a sending unit (1303), configured to send a list of viewer accounts of the live-streaming room, wherein the list of viewer accounts comprises account avatars and account names of the viewer accounts in the live-streaming room and the target label of the target viewer account.
